# EUROPEAN PATENT APPLICATION

(11) **EP 1 647 558 A1**
(43) Date of publication of application: **19.04.2006**
(21) Application number: 05256180.0
(22) Date of filing: 03.10.2005
(51) Int. Cl.: C08F 6/18, C08C 1/065, C08C 1/07

(54) **Process for preparing enlarged latex particles**

(30) Priority: 13.10.2004 US 618246
(71) Applicant: Rohm and Haas Company, Philadelphia, PA 19106-2399 (US)
(72) Inventor: Lester, Christopher, Mill Hall Pennsylvania 17751 (US)
(74) Representative: Kent, Venetia Katherine

(57) **Abstract**

A process for preparing enlarged latex particles by aggregation of primary latex particles in a latex emulsion is disclosed. Also disclosed are processes for making graft copolymer compositions and multimodal polymer compositions using latex emulsions containing enlarged latex particles and uses of the enlarged latex particles, the graft copolymer compositions and multimodal polymer compositions.

## Description

The present invention relates to a process for preparing enlarge latex particles by aggregation of primary latex particles in a latex emulsion. The present invention also relates to a process for making graft copolymer compositions and multimodal polymer compositions using latex emulsions containing enlarged latex particles and to uses of the enlarged latex particles, the graft copolymer compositions and the multimodal polymer compositions of the present invention.

A latex emulsion is an emulsion in which a polymer or copolymer is dispersed as particles in the form of a colloid in water. Latex emulsions prepared by conventional techniques typically comprise primary latex particles having a fine particle diameter, for example, of less than about 150 nm. For certain applications, however, it is desirable to have a latex emulsion comprising latex particles exhibiting larger particle diameters.

Latex emulsions are conventionally prepared using emulsion polymerization techniques. These conventional techniques are adequate for the preparation of latex emulsions having latex particles with particle diameters below about 150 nm. For application where larger particle diameters are desired, however, such conventional techniques are unsatisfactory because they require excessively long polymerization times.

One approach for obtaining latex emulsions having latex particles exhibiting an average particle size of at least 150 nm with a more commercially reasonable reaction time is disclosed by Sakabe in U.S. Patent No. 6,723,764. Sakabe discloses a process for preparing enlarged latex particles by agglomerating primary latex particles in a latex emulsion, comprising:
(1) causing
   (a) an anionic surfactant and
   (b) at least one surfactant selected from the group consisting of a cationic surfactant and an amphoteric surfactant
   to exist in the latex emulsion,
(2) adding, as an aggregating and enlarging agent, at least one selected from the group consisting of:
   (i) an inorganic acid,
   (ii) an organic acid,
   (iii) a substance which forms an acid in water,
   (iv) a combination of at least two substances which are reacted with each other to form an acid, and
   (v) a substance which forms an acid by exposure to active rays
   to the latex emulsion in the presence of these surfactants, and
(3) causing the acid derived from the aggregating and enlarging agent to act on the latex emulsion, thereby forming enlarged latex particles.

Notwithstanding, there remains a need for alternative, economical approaches for producing latex emulsions with enlarged latex particles exhibiting an average particle size of at least 150 nm.

In one aspect of the present invention, there is provided a process for preparing enlarged latex particles having a volume average particle diameter of ≥ 150 nm by aggregation of primary latex particles of a latex emulsion, comprising:
(a) providing a latex emulsion having at least one pH sensitive anionic surfactant and at least one pH insensitive anionic surfactant; and,
(b) reducing the pH of the latex emulsion below 7 by performing one of:
   (i) mixing into the latex emulsion a substance which interacts with water to form an acid;
   (ii) mixing into the latex emulsion a combination of at least two substances which interact to form an acid;
   (iii) mixing into the latex emulsion a substance which forms an acid upon exposure to active rays and exposing the latex emulsion to such active rays; and,
   (iv) any combination of two or more of (i), (ii) and (iii); and,
(c) allowing the primary latex particles to aggregate into enlarged latex particles, optionally, without mechanical agitation; and,
(d) optionally, raising the pH of the latex emulsion; and,
(e) optionally, adding at least one polymerizable monomer to the latex emulsion and polymerizing the at least one polymerizable monomer.

In another aspect of the present invention, there is provided enlarged latex particles obtained using the aggregation process of the present invention.

In another aspect of the present invention, there is provided a use of a latex emulsion containing enlarged latex particles prepared by a process of the present invention as an additive for use in combination with a thermoplastic resin, for example, as at least one of an impact modifier and a processing aid.

In another aspect of the present invention, there is provided a process for preparing a graft copolymer composition, comprising:
(1) preparing enlarged latex particles having a volume average particle diameter of ≥ 150 nm by aggregation of primary latex particles of a latex emulsion, comprising:
   (a) providing a latex emulsion having at least one pH sensitive anionic surfactant and at least one pH insensitive anionic surfactant; and,
   (b) reducing the pH of the latex emulsion below 7 by performing one of:
      (i) mixing into the latex emulsion a substance which interacts with water to form an acid;
      (ii) mixing into the latex emulsion a combination of at least two substances which interact to form an acid,
      (iii) mixing into the latex emulsion a substance which forms an acid upon exposure to active rays and exposing the latex emulsion to such active rays; and,
      (iv) any combination of two or more of (i), (ii) and (iii); and,
   (c) allowing the primary latex particles to aggregate into enlarged latex particles, optionally, without mechanical agitation; and,
(2) raising the pH of the latex emulsion; and,
(3) adding at least one polymerizable monomer to the latex emulsion and graft polymerizing the at least one polymerizable monomer to the enlarged latex particles.

In another aspect of the present invention, there is provided a graft copolymer composition prepared using enlarged latex particles obtained using an aggregation process of the present invention.

In another aspect of the present invention, there is provided a use of a graft copolymer composition prepared by a process of the present invention as an additive for use in combination with a thermoplastic resin, for example, as at least one of an impact modifier and a processing aid.

In another aspect of the present invention, there is provided a process for preparing a multimodal latex emulsion, comprising
(1) preparing enlarged latex particles having a volume average particle diameter of ≥ 150 nm by aggregation of primary latex particles of a latex emulsion, comprising:
   (a) providing a latex emulsion having at least one pH sensitive anionic surfactant and at least one pH insensitive anionic surfactant; and,
   (b) reducing the pH of the latex emulsion below 7 by performing one of:
      (i) mixing into the latex emulsion a substance which interacts with water to form an acid;
      (ii) mixing into the latex emulsion a combination of at least two substances which interact to form an acid,
      (iii) mixing into the latex emulsion a substance which forms an acid upon exposure to active rays and exposing the latex emulsion to such active rays; and,
      (iv) any combination of two or more of (i), (ii) and (iii); and,
   (c) allowing the primary latex particles to aggregate into enlarged latex particles, optionally, without mechanical agitation; and,
(2) raising the pH of the latex emulsion; and,
(3) adding at least one polymerizable monomer to the latex emulsion and polymerizing the at least one polymerizable monomer.

In another aspect of the present invention, there is provided a multimodal polymer composition using enlarged latex particles obtained using an aggregation process of the present invention.

In another aspect of the present invention, there is provided a use of a multimodal polymer composition prepared by a process of the present invention as an additive for use in combination with a thermoplastic resin, for example, as at least one of an impact modifier and a processing aid.

All ranges defined herein are inclusive and combinable.

The term "(co)polymer" as used herein and in the appended claims encompasses both homopolymers and copolymers.

The processes of the present invention provide for the preparation of enlarged latex particles by aggregation of primary latex particles of a latex emulsion with minimal coagulum generation. In some embodiments, the processes of the present invention provide for the preparation of enlarged latex particles with less than 2 wt% coagulum (based on total weight of polymer in the latex emulsion); alternatively less than 1 wt% coagulum; alternatively less than 0.5 wt% coagulum; alternatively less than 0.1 wt% coagulum; alternatively less than 0.05 wt% coagulum; alternatively less than 0.01 wt% coagulum. In some embodiments, at least 99 wt% of the enlarged latex particles in the product latex emulsion (based on total weight of polymer in the latex emulsion) will exhibit a particle diameter of < 5,000 nm; alternatively < 3,000 nm; alternatively < 2,000 nm; alternatively < 1,000 nm.

The term "coagulum" used herein and in the appended claims refers to polymeric material that may be filtered out of a latex emulsion using a screen having 45 µm nominal sieve opening with sieve designations: USA Standard Testing Sieve ASTME-11 Specification No. 325 and Tyler Equivalent 325 mesh.

The enlarged latex particles obtained using the process of the present invention exhibit a volume average particle diameter of ≥ 150 nm; alternatively ≥ 200 nm; alternatively ≥ 250 nm; alternatively ≥ 300 nm; alternatively ≥ 400 nm; alternatively > 500 nm; alternatively ≥ 510 nm; alternatively ≥ 525 nm; alternatively ≥ 550 nm; alternatively ≥ 600 nm; alternatively 150 to 1,000 nm; alternatively 200 to 1,000 nm; alternatively 250 to 1,000 nm; alternatively 300 to 1,000 nm; alternatively 400 to 1,000 nm; alternatively 500 to 1,000 nm; alternatively 510 to 1,000 nm; alternatively 525 to 1,000 nm; alternatively 525 to 1,000 nm; alternatively 600 to 1,000 nm; alternatively 300 to 350 nm; alternatively 400 to 450 nm; alternatively 550 to 650 nm; alternatively 600 to 700 nm.

The primary latex particles contained in latex emulsions suitable for use with the present invention may exhibit a volume average particle diameter of ≤ 200 nm; ≤ 150 nm; alternatively ≤ 100 nm; alternatively ≤ 80 nm; alternatively 20 to 200 nm; alternatively 20 to 150 nm; alternatively 50 to 150 nm; alternatively 50 to 100 nm; alternatively 80 to 100 nm.

Anionic surfactants suitable for use with the present invention as pH sensitive anionic surfactants include, for example, carboxylic acid salts. Suitable carboxylic acid salts may include, for example, alkali metal salts of fatty acids, alkali metal salts of rosinic acid, alkali metal salts of alkylsarcosinic acids and alkali metal salts of alkenylsuccinic acids; alternatively, sodium oleate, potassium oleate, sodium stearate, potassium stearate, sodium myristate, potassium myristate, sodium palmitate, potassium palmitate, potassium laurate, potassium undecanate, sodium linoleate, potassium linolate, potassium caprylate, potassium nonanate, potassium caprinate and disproportionating potassium rosinate; alternatively potassium oleate. In some embodiments, the pH sensitive anionic surfactants of the present invention have parent acids that exhibit a pKa of ≥ 3; alternatively 3 to 6; alternatively 3.5 to 5.5; alternatively 4 to 5. In some embodiments, the latex emulsions of the present invention comprise 0.3 to 1.1 wt% pH sensitive anionic surfactants (based on the total weight of polymer in the latex emulsion); alternatively 0.3 to 0.8 wt%; alternatively 0.4 to 0.8 wt%; alternatively 0.3 to 0.5 wt%; alternatively 0.35 to 0.45 wt%.

Anionic surfactants suitable for use with the present invention as pH insensitive anionic surfactants include, for example, alkyl sulfonates, aryl sulfonates, alkyl sulfates, aryl sulfates, alkyl phosphates, aryl phosphates, alkyl phosphonates and aryl phosphonates; alternatively alkyl sulfonates, aryl sulfonates, alkyl sulfates and aryl sulfates; alternatively sodium bis(2-ethylhexyl)sulfosuccinate, alkyldiphenyloxide disulfonate salts, sodium dodecyl benzene sulfonate, sodium lauryl ether sulfate, sodium lauryl sulfate and sodium dodecyl sulfate; alternatively sodium lauryl sulfate. In some embodiments, the pH insensitive anionic surfactants of the present invention have parent acids that exhibit a pKa of < 3; alternatively ≤ 2.5; alternatively ≤ 2.0; alternatively ≤ 1.5; alternatively ≤ 1.0; alternatively ≤ 0. In some embodiments, the latex emulsions of the present invention comprise 0.005 to 0.1 wt% pH insensitive anionic surfactants (based on the total weight of polymer in the latex emulsion); alternatively 0.01 to 0.03 wt%; alternatively 0.015 to 0.025 wt%.

Latex emulsions having primary latex particles suitable for use with the present invention may be prepared by a variety of known processes. For example, the latex emulsions having primarily latex particles may be prepared by conventional emulsion polymerization techniques.

The primary latex particles in the latex emulsions suitable for use with the present invention may be derived from a variety of materials including, for example, (co)polymers of diene monomers such as butadiene, isoprene and chloroprene; (co)polymers of vinyl monomers such as styrene, acrylonitrile, acrylic esters, methacrylic esters, ethylene, vinyl chloride, vinylidene chloride, vinyl acetate and vinyl fluoride; copolymers of a diene monomer with a vinyl monomer; silicone resins such as polyorganosiloxanes; polyester; epoxy resins; melamine resins; polyamide; polyurethane and mixtures thereof; alternatively (co)polymers of vinyl monomers, (co)polymers of diene monomers and copolymers of diene monomers and vinyl monomers; alternatively copolymers of diene monomers and vinyl monomers; alternatively butadiene/styrene copolymers.

In some embodiments, the materials from which the primary latex particles may be derived include crosslinkable monomers including, for example, divinylbenzene, ethylene glycol dimethacrylate, trimethylolpropane trimethacrylate and 1,3-butanediol diacrylate; polymerization initiators including, for example, radical polymerization initiators, heat decomposable polymerization initiators and redox initiators; chain transfer agents including, for example, t-dodecylmercaptan, n-octylmercaptan and α-methylstyrene dimers; and surfactants including, for example, pH sensitive anionic surfactants and pH insensitive anionic surfactants.

In one aspect, the latex emulsions of the present invention do not contain cationic surfactants and do not contain amphoteric surfactants.

In some embodiments, the primary latex particles may be prepared using a diene monomer, a vinyl monomer and a monomer having an anionic and/or cationic functional group. Monomers having an anionic and/or cationic functional group include, for example, acrylic acid, methacrylic acid, itaconic acid, fumaric acid, acrylamide, methacrylamide, hydroxyethyl methacrylate, hydroxyethyl acrylate and glycidyl methacrylate.

In some embodiments, the primary latex particles exhibit a core/shell structure. In some embodiments, the primary latex particles of the present invention may comprise an organic/inorganic composite.

Latex emulsions containing primary latex particles suitable for use with the present invention preferably exhibit a pH of 7 to 12; alternatively 7 to 10; alternatively ≥ 7; alternatively ≥ 8; alternatively ≥ 9.

Substances that interact with water to form an acid suitable for use with the present invention include, for example, anhydrides such as acetic anhydride and maleic anhydride; esters such as sulfuric esters and phosphoric esters; acid chlorides and carbon dioxide.

Combinations of at least two substances that interact to form an acid suitable for use with the present invention include, for example, a combination of a peroxide and a formaldehyde; a peroxide and a sulfoxylic acid salt; and a peroxide and a formaldehydesulfoxylate; alternatively a peroxide and a formaldehydesulfoxylate; alternatively hydrogen peroxide and sodium formaldehydesulfoxylate. In some embodiments, such combinations of at least two substances may be added as an aqueous solution to the latex emulsion. In some embodiments, a sufficient quantity of such a combination of at least two substances is added to the latex emulsion to lower the pH of the latex emulsion below 7; alternatively to 1 to 6; alternatively to 2 to 6; alternatively to 3 to 6; alternatively to 3 to 5.

Substances which form an acid upon exposure to active rays suitable for use with the present invention include, for example, substances that form a Bronsted acid or Lewis acid when exposed to active rays. Such substances include, for example, onium salts, halogenated organic compounds, quinonediazide compounds, α,α-bis(sulfonyl)diazomethane compounds, α-carbonyl-α-sulfonyl-diazomethane compounds, sulfonic compounds, organic ester compounds, organic acid amide compounds and organic acid imide compounds. Active rays include, for example, ultraviolet rays, far ultraviolet rays, electron rays and laser beams. In some embodiments, the substances which form an acid upon exposure to active rays may be added as an aqueous solution to the latex emulsion. In some embodiments, a sufficient quantity of such substances are added to the latex emulsion to lower the pH of the latex emulsion below 7; alternative to 1 to 6; alternatively to 2 to 6; alternatively to 3 to 6; alternatively to 3 to 5.

In some embodiments, a salt may be used in combination with the combination of at least two substances that interact to form an acid and/or the substance(s) which form(s) an acid upon exposure to active rays. The salt may be present in the latex emulsion (e.g., the salt may have been added previously during preparation of the primary latex particles in the latex emulsion) or may be added to the latex emulsion in advance of or contemporaneously with the combination of the at least two substances that interact to form an acid and/or the substance(s) which form(s) an acid upon exposure to active rays. Salts exhibiting no pH-buffering effect suitable for use with the present invention include, for example, sodium chloride, potassium chloride and calcium chloride. Salts exhibiting a pH-buffering effect suitable for use with the present invention include, for example, sodium pyrophosphate, sodium carbonate and ammonium sulfate.

Without wishing to be bound by theory, it is believed that as the pH of the latex emulsion falls, the stabilizing activity of the pH sensitive anioinic surfactant is reduced. This reduction in the stabilizing affect of the pH sensitive anionic surfactant is believed to facilitate the aggregation of the primary latex particles into enlarged latex particles.

The primary latex particles are allowed to aggregate into enlarged latex particles until the enlarged latex particles exhibit the desired particle size. In some embodiments, the primary latex particles are allowed to aggregate into enlarged latex particles for a period of time of ≤ 2 hours; alternatively ≤ 1.5 hours; alternative ≤ 1 hour.

In some embodiments, the latex emulsion may optionally be subjected to agitation while the primary latex particles are allowed to aggregate into enlarged latex particles. For example, the latex emulsion may optionally be subjected to ultrasonic vibration while the primary latex particles are allowed to aggregate into enlarged latex particles. In other embodiments, mechanical agitation is stopped once the combination of at least two substances that interact to form an acid and/or the substance(s) that form(s) an acid upon exposure to active rays are added and dispersed in the latex emulsion. Without wishing to be bound by theory, it is believed that, in the absence of mechanical agitation, the aggregation of the primary latex particles into enlarged latex particles takes place through Brownian aggregation.

In some embodiments, the latex emulsion temperature, during the period when the primary latex particles are allowed to aggregate into enlarged latex particles, may be maintained at 20 to 90°C; alternatively at 40 to 90°C; alternatively at 45 to 90°C; alternatively at 50 to 90°C; alternatively at 55 to 90°C; alternatively at 60 to 90°C; alternatively at 50 to 70 °C; alternatively at 55 to 65°C; alternatively, at or above the glass transition temperature of the (co)polymer component(s) of which the latex particles are comprised.

After allowing the primary latex particles to aggregate into enlarged latex particles, the pH of the latex emulsion may, optionally, be raised. In some embodiments, a basic substance is added to the latex emulsion to raise its pH. Suitable basic substances include, for example, sodium hydroxide, potassium hydroxide, sodium carbonate and potassium carbonate. In some embodiments, the basic substance(s) is(are) added as aqueous solutions to the latex emulsion. In some embodiments of the present invention, sufficient basic substance(s) is(are) added following the aggregation of primary latex particles into enlarged latex particles to raise the pH of the latex emulsion to 6 to 10; alternatively ≥ 7; alternatively ≥ 8; alternatively ≥ 9.

The enlarged latex particles obtained by the process of the present invention may be subjected to graft polymerization to provide a graft copolymer containing the enlarged latex particles. In some embodiments, the graft polymerization may be conducted by polymerizing at least one polymerizable monomer in the presence of the enlarged latex particles in the latex emulsion. In some embodiments, the graft polymerization process may be performed as an emulsion polymerization process or a suspension polymerization process.

Polymerizable monomers suitable for use with the invention in the preparation of the graft polymers include, for example, aromatic vinyl monomers such as styrene and α-methylstyrene; aromatic polycyclic vinyl monomers such as 4-vinylbiphenyl and 2-vinylnaphthalene; unsaturated nitriles such as acrylonitrile and methacrylonitrile; alkyl (meth)acrylate monomers such as methyl methacrylate and butyl acrylate; unsaturated carboxylic acids such as acrylic acid, methacrylic acid, maleic acid and maleic anhydride; maleimide monomers such as maleimide and N-phenylmaleimide; and combinations thereof.

Various other materials may also be added to the reaction mixture to facilitate the preparation of the graft copolymer including, for example, polyfunctional vinyl monomers including, for example, divinylbenzene, allyl methacrylate, ethylene glycol dimethacrylate and 1,3-butylene dimethacrylate; chain transfer agents including, for example, t-dodecylmercaptan and n-octylmercaptan.

The at least one polymerizable monomer graft polymerized to the enlarged latex particles may be added to the reaction system all at once, in several portions, continuously or in any combination thereof. When the graft polymerization is conducted in two or more stages, the at least one polymerizable monomer added in respective stages may be the same or different.

In some embodiments, the graft copolymers of the present invention exhibit enhanced transparency. In such embodiments, the polymerizable monomers for graft polymerizing to the enlarged latex particles may be selected such that the polymerizable monomers and the enlarged latex particles exhibit similar refractive indices; alternatively, the difference in refractive index between the polymerizable monomers for graft polymerizing to the enlarged latex particles and the graft copolymer formed may be ≤ 0.02; alternatively ≤ 0.01; alternatively ≤ 0.005.

The graft copolymers containing enlarged latex particles of the present invention may exhibit a volume average particle diameter of ≥ 150 nm; alternatively ≥ 200 nm; alternatively ≥ 250 nm; alternatively ≥ 300 nm; alternatively ≥ 400 nm; alternatively > 500 nm; alternatively ≥ 510 nm; alternatively ≥ 525 nm; alternatively ≥ 550 nm; alternatively ≥ 600 nm; alternatively 150 to 1,000 nm; alternatively 200 to 1,000 nm; alternatively 250 to 1,000 nm; alternatively 300 to 1,000 nm; alternatively 400 to 1,000 nm; alternatively 500 to 1,000 nm; alternatively 510 to 1,000 nm; alternatively 525 to 1,000 nm; alternatively 525 to 1,000 nm; alternatively 600 to 1,000 nm; alternatively 300 to 350 nm; alternatively 400 to 450 nm; alternatively 550 to 650 nm; alternatively 600 to 700 nm.

In some embodiments, the enlarged latex particle containing latex emulsions of the present invention may be used to prepare multimodal polymer particle compositions having at least two populations of polymer particles. In some embodiments, the enlarged latex particles comprise one population of polymer particles in the multimodal polymer particle composition. In some embodiments, multimodal polymer particle compositions may be prepared with high solids, for example, ≥ 40 wt% solids, alternatively ≥ 45 wt% solids, alternatively ≥ 50 wt% solids. In some embodiments, multimodal polymer particle compositions may be prepared having process viscosities of ≤ 2,000 centipoise.

The enlarged latex particles, the graft copolymer compositions and the multimodal polymer compositions of the present invention may be used in a variety of commercial applications, alone or in combination with other materials. For example, the enlarged latex particles, the graft copolymer compositions and multimodal polymer compositions of the present invention may be individually blended into various thermoplastic resins to modify the properties of the thermoplastic resin as, for example, impact modifiers and/or processing aids.

Thermoplastic resins suitable for use with the present invention include, for example, polystyrene, high impact polystyrene, acrylic resin, methacrylic resin, polyamide (e.g., Nylon), methyl methacrylate-styrene resin, vinyl chloride resin, chlorinated vinyl chloride resin, acrylonitrile-styrene resin, acrylonitrile-butadiene-styrene resin, thermoplastic polyester resin, polycarbonate resin, and mixtures thereof; alternatively acrylic resin, methacrylic resin, acrylonitrile-styrene resin, acrylonitrile-butadiene-styrene resin, thermoplastic polyester resin, polycarbonate resin, polyamide (e.g., Nylon) and mixtures thereof; alternatively poly(methyl)methacrylate resin, acrylonitrile-styrene resin, acrylonitrile-butadiene-styrene resin, polycarbonate resin, polyamide (e.g., Nylon) and mixtures thereof.

The enlarged latex particles, graft copolymer compositions and/or the multimodal polymer compositions of the present invention may be provided as a latex, slurry or product particles separated and collected therefrom. No particular limitation is imposed on a method for separating and collecting the enlarged latex particles, graft copolymer composition or multimodal polymer composition as product particles from the latex or slurry. Suitable methods known in the art include, for example, spray drying, coagulation and freeze drying. Additives such as antioxidants, ultraviolet absorbents, anti-blocking agents, pigments, fillers, lubricants, antistatic agents and antibacterial agents may be added to the latex emulsion before or after, for example, the drying and collection of the product particles from the latex or slurry.

The blending ratio of the product particles to the thermoplastic resin may be selected to provide the desired properties to the product resin system. In some embodiments, the blending ratio (based on a solids content) of the product particles to the thermoplastic resin may fall within the range of 0.1 to 99.9 wt% to 99.9 to 0.1 wt%, respectively; alternatively 1 to 99 wt% to 99 to 1 wt%. In some embodiments, where the product particles are blended with a thermoplastic resin as impact modifiers, the blend may contain 1 to 50 wt% (based on a solids content) product particles; alternatively 10 to 50 wt%; alternatively 20 to 50 wt%; alternatively 20 to 40 wt%.

### Examples

Some embodiments of the present invention will now be described in detail in the following examples.

All designations of "part" or "parts" and "%" used in the following examples mean part or parts by dry weight and wt%, respectively, unless expressly noted otherwise. The designation "%BOM" used in the following examples means the dry wt% based on the dry weight of the monomer. The designation "%BOP" used in the following examples means the dry wt% based on the dry weight of the polymer.

The physical properties provided in the examples were determined in accordance with the following methods.

### Volume average particle diameter

A Matec Applied Sciences CHDF-2000 Particle Size Distribution Analyzer was used in accordance with the manufacturer's instructions to provide the particle size analysis data presented in the following Examples.

### Example 1

Primary latex particles were prepared as follows:
a) All of the substances listed in Table 1, except the sodium formaldehydesulfoxylate, the diisopropylbenzene hydroperoxide and the butadiene, were added to a pressure container with stirring;
b) The butadiene was then charged to the pressure container with continued stirring;
c) The contents of the pressure container were heated to 50°C with continued stirring;
d) The sodium formaldehydesulfoxylate and the diisopropylbenzene hydroperoxide were then gradually added to the pressure container over a 10 hour period with continued stirring to produce a latex emulsion containing primary latex particles.

**Table 1**

| Substance | %BOM |
|---|---|
| Tetrasodium pyrophosphate--(TSPP) | 0.08 |
| Ethylenediaminetetraacetic acid, iron(III) sodium salt hydrate--(Fe(EDTA)) | 0.004 |
| Sodium formaldehydesulfoxylate--(SFS) | 0.18 |
| Potassium oleate--(pH sensitive anionic surfactant) | 0.40 |
| Diisopropylbenzene hydroperoxide--(DIBHP) | 0.88 |
| Butadiene | 99.83 |
| t-dodecyl mercaptan--(t-DDM) | 0.17 |
| | |
| Distilled water | 193.25 |

The monomer conversion to polymer product was about 99.5%. The volume average particle diameter of the primary latex particles contained in the latex emulsion obtained was measured at 95 nm using a Matec Applied Sciences CHDF-2000 Particle Size Distribution Analyzer, as described above.

### Example 2

Enlarged latex particles were prepared from primary latex particles in a latex emulsion obtained according to Example 1 as follows:
a) 0.05 %BOP alkyldiphenyloxide disulfonate salt (Dowfax® 2A1 commercially available from the Dow Chemical Company) was added to a latex emulsion containing primary latex particles obtained as described in Example 1 with stirring;
b) the contents of the pressure container were then heated to 60°C;
c) 0.4 %BOP Sodium formaldehydesulfoxylate (SFS) was then added to the pressure container with continued stirring;
d) 5 minutes after the SFS addition in (c), 0.22 %BOP hydrogen peroxide was added to the pressure container with continued stirring;
e) 10 minutes after the hydrogen peroxide addition in (d), the stirring was stopped;
f) The contents of the pressure container were then held for 50 minutes without stirring;
g) 1.0 %BOP of sodium hydroxide was then added to the pressure container;
h) 2 minutes after the sodium hydroxide addition in (g), stirring was resumed; and,
i) An additional 0.082 %BOP alkyldiphenyloxide disulfonate salt (Dowfax® 2A1) was then added to the contents of the pressure container with continued stirring to give a product latex emulsion containing enlarged latex particles.

The enlarged latex particles contained in the product latex emulsion exhibited a volume average particle diameter of 269 nm as measured with a Matec Applied Sciences CHDF-2000 Particle Size Distribution Analyzer, as described above.

### Example 3

Enlarged latex particles were prepared from primary latex particles in a latex emulsion obtained according to Example 1 as follows:
a) 0.025 %BOP alkyldiphenyloxide disulfonate salt (Dowfax® 2A1) was added to a latex emulsion containing primary latex particles obtained as described in Example 1 with stirring;
b) the contents of the pressure container were then heated to 60°C;
c) 0.4 %BOP Sodium formaldehydesulfoxylate (SFS) was then added to the pressure container with continued stirring;
d) 5 minutes after the SFS addition in (c), 0.22 %BOP hydrogen peroxide was added to the pressure container with continued stirring;
e) 10 minutes after the hydrogen peroxide addition in (d), the stirring was stopped;
f) The contents of the pressure container were then held for 50 minutes without stirring;
g) 1.0 %BOP of sodium hydroxide was then added to the pressure container;
h) 2 minutes after the sodium hydroxide addition in (g), stirring was resumed; and,
i) An additional 0.082 %BOP alkyldiphenyloxide disulfonate salt (Dowfax® 2A1) was then added to the contents of the pressure container with continued stirring to give a product latex emulsion containing enlarged latex particles.

The enlarged latex particles contained in the product latex emulsion exhibited a volume average particle diameter of 355 nm as measured with a Matec Applied Sciences CHDF-2000 Particle Size Distribution Analyzer, as described above.

### Example 4

Enlarged latex particles were prepared from primary latex particles in a latex emulsion obtained according to Example 1 as follows:
a) 0.0225 %BOP alkyldiphenyloxide disulfonate salt (Dowfax® 2A1) was added to a latex emulsion containing primary latex particles obtained as described in Example 1 with stirring;
b) the contents of the pressure container were then heated to 60°C;
c) 0.4 %BOP Sodium formaldehydesulfoxylate (SFS) was then added to the pressure container with continued stirring;
d) 5 minutes after the SFS addition in (c), 0.22 %BOP hydrogen peroxide was added to the pressure container with continued stirring;
e) 10 minutes after the hydrogen peroxide addition in (d), the stirring was stopped;
f) The contents of the pressure container were then held for 50 minutes without stirring;
g) 1.0 %BOP of sodium hydroxide was then added to the pressure container;
h) 2 minutes after the sodium hydroxide addition in (g), stirring was resumed; and,
i) An additional 0.082 %BOP alkyldiphenyloxide disulfonate salt (Dowfax® 2A1) was then added to the contents of the pressure container with continued stirring to give a product latex emulsion containing enlarged latex particles.

The enlarged latex particles contained in the product latex emulsion exhibited a volume average particle diameter of 423 nm as measured with a Matec Applied Sciences CHDF-2000 Particle Size Distribution Analyzer as described above.

### Example 5

Enlarged latex particles were prepared from primary latex particles in a latex emulsion obtained according to Example 1 as follows:
a) 0.02 %BOP alkyldiphenyloxide disulfonate salt (Dowfax® 2A1) was added to a latex emulsion containing primary latex particles obtained as described in Example 1 with stirring;
b) the contents of the pressure container were then heated to 60°C;
c) 0.4 %BOP Sodium formaldehydesulfoxylate (SFS) was then added to the pressure container with continued stirring;
d) 5 minutes after the SFS addition in (c), 0.22 %BOP hydrogen peroxide was added to the pressure container with continued stirring;
e) 10 minutes after the hydrogen peroxide addition in (d), the stirring was stopped;
f) The contents of the pressure container were then held for 50 minutes without stirring;
g) 1.0 %BOP of sodium hydroxide was then added to the pressure container;
h) 2 minutes after the sodium hydroxide addition in (g), stirring was resumed; and,
i) An additional 0.082 %BOP alkyldiphenyloxide disulfonate salt (Dowfax® 2A1) was then added to the contents of the pressure container with continued stirring to give a product latex emulsion containing enlarged latex particles.

The enlarged latex particles contained in the product latex emulsion exhibited a volume average particle diameter of 489 nm as measured with a Matec Applied Sciences CHDF-2000 Particle Size Distribution Analyzer, as described above.

### Example 6

Enlarged latex particles were prepared from primary latex particles in a latex emulsion obtained according to Example 1 as follows:
a) 0.025 %BOP sodium lauryl sulfate (SLS) was added to a latex emulsion containing primary latex particles obtained as described in Example 1 with stirring;
b) the contents of the pressure container were then heated to 60°C;
c) 0.53 %BOP Sodium formaldehydesulfoxylate (SFS) was then added to the pressure container with continued stirring;
d) 5 minutes after the SFS addition in (c), 0.28 %BOP hydrogen peroxide was added to the pressure container with continued stirring;
e) 10 minutes after the hydrogen peroxide addition in (d), the stirring was stopped;
f) The contents of the pressure container were then held for 50 minutes without stirring;
g) 1.0 %BOP of sodium hydroxide was then added to the pressure container;
h) 2 minutes after the sodium hydroxide addition in (g), stirring was resumed; and,
i) An additional 0.082 %BOP alkyldiphenyloxide disulfonate salt (Dowfax® 2A1) was then added to the contents of the pressure container with continued stirring to give a product latex emulsion containing enlarged latex particles.

The enlarged latex particles contained in the product latex emulsion exhibited a volume average particle diameter of 650 nm as measured with a Matec Applied Sciences CHDF-2000 Particle Size Distribution Analyzer, as described above.

### Example 7

Enlarged latex particles were prepared from primary latex particles in a latex emulsion obtained according to Example 1 as follows:
a) 0.025 %BOP alkyldiphenyloxide disulfonate salt (Dowfax® 2A1) was added to a latex emulsion containing primary latex particles obtained as described in Example 1 with stirring;
b) the contents of the pressure container were then heated to 60°C;
c) 0.61 %BOP Sodium formaldehydesulfoxylate (SFS) was then added to the pressure container with continued stirring;
d) 5 minutes after the SFS addition in (c), 0.32 %BOP hydrogen peroxide was added to the pressure container with continued stirring;
e) 10 minutes after the hydrogen peroxide addition in (d), the stirring was stopped;
f) The contents of the pressure container were then held for 50 minutes without stirring;
g) 1.0 %BOP of sodium hydroxide was then added to the pressure container;
h) 2 minutes after the sodium hydroxide addition in (g), stirring was resumed; and,
i) An additional 0.082 %BOP alkyldiphenyloxide disulfonate salt (Dowfax® 2A1) was then added to the contents of the pressure container with continued stirring to give a product latex emulsion containing enlarged latex particles.

The enlarged latex particles contained in the product latex emulsion exhibited a volume average particle diameter of 580 nm as measured with a Matec Applied Sciences CHDF-2000 Particle Size Distribution Analyzer, as described above.

### Example 8

A latex emulsion containing enlarged latex particles having a core shell morphology may be prepared from the product of any one of Examples 2-5, as follows:
a) 90 g (on a solids basis) of the enlarged latex particles from one of Examples 2-5 is added to a pressure container equipped with a stirrer;
b) the contents of the pressure container are heated to 60 °C;
c) 9 g of methyl methacrylate, 1 g butyl acrylate, 0.13 g t-butyl hydroperoxide and 0.13 g sodium formaldehydesulfoxylate are added to the pressure container over a 1 hour period with stirring;
d) the contents of the pressure container are held with stirring for an additional 3 hours to provide a product graft copolymer composition.

### Example 9

Primary latex particles were prepared as follows:
a) The first 3 ingredients listed in Table 2 were added to a container with stirring;
b) The contents of the container were heated to 70°C with continued stirring;
c) The butyl acrylate/allyl methacrylate emulsion, the sodium formaldehydesulfoxylate (1) and the t-butyl hydroperoxide where gradually added to the container over a 2 hour period with continued stirring to produce a latex emulsion containing primary latex particles;
d) The temperature of the contents of the container were adjusted to 55 °C; and
e) The methyl methacrylate, sodium formaldehydesulfoxylate (2) and sodium persulfate were added.

**Table 2**

| Substance | | %BOM |
|---|---|---|
| **Reactor Charge** | | |
| Distilled water | | 173 |
| Ethylenediaminetetraacetic acid, iron(III) sodium salt hydrate--(Fe(EDTA)) | | 0.004 |
| Potassium oleate--(pH sensitive anionic surfactant) | | 0.311 |
| t-Butyl hydroperoxide | | 0.20 |
| Sodium formaldehydesulfoxylate (1)--(SFS) | | 0.20 |
| Methyl methacrylate | | 1 |
| Sodium formaldehydesulfoxylate (2)--(SFS) | | 0.05 |
| Sodium persulfate | | 0.05 |
| **Emulsified Monomer Mix** | | |
| | Butyl acrylate | 98.3 |
| | Allyl methacrylate | 0.7 |
| | Potassium oleate--(pH sensitive anionic surfactant) | 0.156 |
| | Distilled water | 25 |

The monomer conversion to polymer product was about 99.5%. The volume average particle diameter of the primary latex particles contained in the latex emulsion obtained was measured at 96 nm using a Matec Applied Sciences CHDF-2000 Particle Size Distribution Analyzer, as described above.

### Example 10

Enlarged latex particles were prepared from primary latex particles in a latex emulsion obtained according to Example 9 as follows:
a) 0.033 %BOP sodium lauryl sulfate was added to a latex emulsion containing primary latex particles obtained as described in Example 9 with stirring;
b) the contents of the container were then heated to 60°C;
c) 0.449 %BOP Sodium formaldehydesulfoxylate (SFS) was then added to the container with continued stirring;
d) 5 minutes after the SFS addition in (c), 0.248 %BOP hydrogen peroxide was added to the container with continued stirring;
e) 10 minutes after the hydrogen peroxide addition in (d), the stirring was stopped;
f) The contents of the container were then held for 50 minutes without stirring;
g) 1.0 %BOP of sodium hydroxide was then added to the container; and,
h) 2 minutes after the sodium hydroxide addition in (g), stirring was resumed to give a product latex emulsion containing enlarged latex particles.

The enlarged latex particles contained in the product latex emulsion exhibited a volume average particle diameter of 330 nm as measured with a Matec Applied Sciences CHDF-2000 Particle Size Distribution Analyzer, as described above.

## Claims

1. A process for preparing enlarged latex particles having a volume average particle diameter of ≥ 150 nm by aggregation of primary latex particles of a latex emulsion, comprising:
(a) providing a latex emulsion having at least one pH sensitive anionic surfactant and at least one pH insensitive anionic surfactant;
(b) reducing the pH of the latex emulsion to below 7 by performing one of:
(i) mixing into the latex emulsion a substance which interacts with water to form an acid;
(ii) mixing into the latex emulsion a combination of at least two substances which interact to form an acid,
(iii) mixing into the latex emulsion a substance which forms an acid upon exposure to active rays and exposing the latex emulsion to such active rays, and
(iv) any combination of two or more of (i), (ii) and (iii); and,
(c) allowing the primary latex particles to aggregate into enlarged latex particles.

2. The process of claim 1, further comprising:
(d) raising the pH of the latex emulsion.

3. The process of claim 1, wherein the enlarged latex exhibits a volume average particle diameter of <500 nm and wherein at least 99 wt% of the enlarged latex particles exhibit a particle diameter of <1,000 nm.

4. Enlarged latex particles obtained by the preparation process according to claim 1.

5. Use of enlarged latex particles according to claim 4 as an additive for use in combination with a thermoplastic resin as at least one of an impact modifier and a processing aid.

6. The process of claim 2, further comprising:
(e) adding at least one polymerizable monomer to the latex emulsion and graft polymerizing the at least one polymerizable monomer to the enlarged latex particles.

7. A graft copolymer composition obtained by the process of claim 6.

8. Use of a graft copolymer composition according to claim 7 as an additive for use in combination with a thermoplastic resin as at least one of an impact modifier and a processing aid.

9. The process of claim 2, further comprising:
(e) adding at least one polymerizable monomer to the latex emulsion and polymerizing the at least one polymerizable monomer.

10. A multimodal polymer composition obtained by the process of claim 9.

11. Use of a multimodal polymer composition according to claim 9 as an additive for use in combination with a thermoplastic resin as at least one of an impact modifier and a processing aid.
